# EUROPEAN PATENT SPECIFICATION

(11) **EP 3 944 583 B1**
(45) Date of publication and mention of the grant of the patent: **12.07.2023**
(21) Application number: 21165859.6
(22) Date of filing: 30.03.2021
(51) Int. Cl.: H04L 9/40, H04L 9/32, G06F 21/33, H04L 9/08

(54) **COMMUNICATION PROGRAM, RELAY DEVICE, AND COMMUNICATION METHOD**
KOMMUNIKATIONSPROGRAMM, RELAISVORRICHTUNG UND KOMMUNIKATIONSVERFAHREN
PROGRAMME DE COMMUNICATION, DISPOSITIF DE RELAIS ET PROCÉDÉ DE COMMUNICATION

(30) Priority: 20.07.2020 JP 2020123475
(43) Date of publication of application: 26.01.2022
(73) Proprietor: FUJITSU LIMITED, Kanagawa 211-8588 (JP)
(72) Inventor: SUZUKI, Dai, Kawasaki-shi 211-8588 (JP)
(74) Representative: Haseltine Lake Kempner LLP

(56) References cited:
- EP-A2- 1 381 201
- US-A1- 2002 026 427
- US-A1- 2013 332 987

## Description

### FIELD

The embodiments discussed herein are related to a storage medium, a relay device, and a communication method.

### BACKGROUND

When using various services, a user of the service sometimes presents some kind of certificate to prove his/her identity. Examples of the certificate include a resident's card and a driver's license issued by a government, a graduation certificate issued by a school, and the like. By causing a service user to present the certificate, a service provider confirms the attributes of the service user (gender, date of birth, and the like) and that the identity of the service user is definitely correct, and then provides the service.

In recent years, a technique for digitizing a certificate using an electronic signature technique has become widespread. The issuer of the certificate confirms attribute information in regard to the user, and issues an electronic certificate containing the confirmed contents to the user.

Techniques relating to digital certificates are described in the following prior art documents. For example, Japanese Laid-open Patent Publication No. 2009-245370, Japanese Laid-open Patent Publication No. 2016-195440, Japanese Laid-open Patent Publication No. 2019-46036, and the like are disclosed as related art. European Patent Application No. EP1381201 A2 relates to a remote access system including, as entities, target units to be accessed, a home gateway serving as an entrance of a home network to which the target units belong, and a portable unit carried by the user to access the target units. In the remote access system, when the portable unit sends and presents an attribute certificate in which at least privilege with regard to a resource and information of the home gateway are described, to the target units through the home gateway, an access made by the portable unit to the resource is checked.

### SUMMARY

### [TECHNICAL PROBLEM]

A digital certificate is presented by a user to whom the digital certificate has been issued, to a verifier who demands the presentation of the certificate. However, the issuer of the certificate sometimes does not wish the certificate to be disclosed to a particular business operator, for example, depending on the contents contained in the certificate. Furthermore, for example, from the viewpoint of security such as anti-counterfeiting, it is not preferable that the certificate is disclosed to a business operator suspected of committing a security breach.

### [SOLUTION TO PROBLEM]

The present invention is defined by the independent claims, to which reference should now be made. Specific embodiments are defined in the dependent claims.

### BRIEF DESCRIPTION OF DRAWINGS

Embodiments are set out, by way of example only, with reference to the following drawings, in which:
FIG. 1 is a diagram illustrating an exemplary configuration of a communication system;
FIG. 2 is a diagram representing an exemplary configuration of a relay device;
FIG. 3 is a diagram representing an exemplary configuration of an issuer communication device;
FIG. 4 is a diagram representing an exemplary configuration of a user communication device;
FIG. 5 is a diagram illustrating an example of a certificate issuance sequence;
FIG. 6 is a diagram illustrating an example of a process flowchart of a certificate issuance process;
FIG. 7 is a diagram illustrating an example of a process flowchart of a transmission policy registration process;
FIG. 8 is a diagram illustrating an example of a transmission policy;
FIG. 9 is a diagram illustrating an example of a process flowchart of a certificate registration process;
FIG. 10 is a diagram illustrating an example of a process flowchart of an encryption key storage process;
FIG. 11 is a diagram illustrating an example of a certificate sending sequence;
FIG. 12 is a diagram illustrating an example of a process flowchart of a certification request process;
FIG. 13 is a diagram illustrating an example of a process flowchart of a certificate transmission process;
FIG. 14 is a diagram illustrating an example of an encryption key sending sequence;
FIG. 15 is a diagram illustrating an example of a communication system according to a second embodiment;
FIG. 16 is a diagram illustrating an example of an encryption key sending sequence according to a third embodiment;
FIG. 17 is a diagram illustrating an example of a process flowchart of a certification request process according to the third embodiment; and
FIG. 18 is a diagram illustrating an example of a process flowchart of an encryption key transfer process.

### [ADVANTAGEOUS EFFECTS OF INVENTION]

In one aspect, it is possible to provide to suppress the disclosure of a certificate issued to a user to a particular business operator.

### DESCRIPTION OF EMBODIMENTS

### [First Embodiment]

A first embodiment will be described.

### <Exemplary Configuration of Communication System 1>

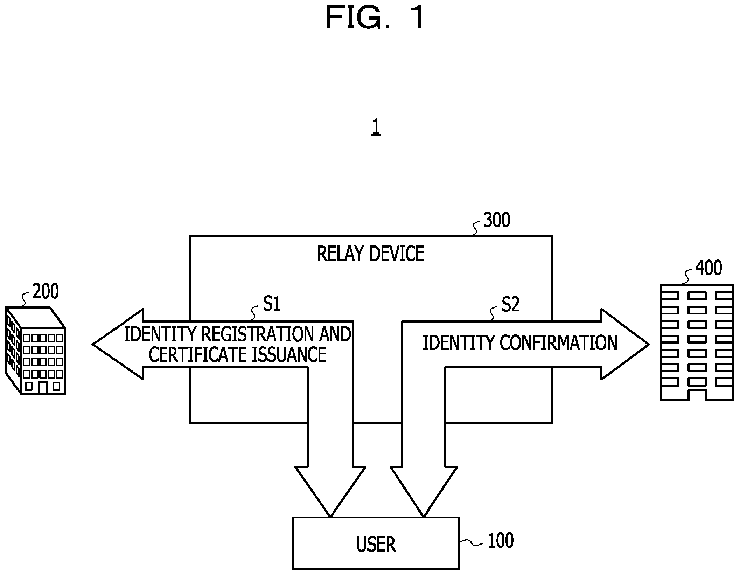

FIG. 1 is a diagram illustrating an exemplary configuration of a communication system 1. The communication system 1 includes a user 100, an issuer 200, a relay device 300, and a verifier 400. The communication system 1 is a personal authentication system that issues a certificate to the user 100 and performs the personal authentication for the user 100 by the certificate. Note that there may be a plurality of users 100, issuers 200, and verifiers 400, individually. Furthermore, the user 100, the issuer 200, and the verifier 400 are synonymous with a communication device used by the user 100, a communication device used by the issuer 200, and a communication device used by the verifier 400, respectively. Hereinafter, the user 100, the issuer 200, and the verifier 400 may be read as the communication device used by the user 100, the communication device used by the issuer 200, and the communication device used by the verifier 400, respectively.

In the communication system 1, each device is connected via a network. Examples of the network include the Internet and a local network.

The user 100 is, for example, a user who asks for the issuance of a certificate or a user who uses a service.

The issuer 200 is a person who issues a certificate to the user 100, and is, for example, a company or a public institution.

The verifier 400 is a person who requests the proof of identity from the user 100, and is, for example, a service provider or a service providing company that provides a service.

The relay device 300 is a device that manages and relays (transmits and receives) digitally issued certificates, and is, for example, a server machine or a communication device having a hub function.

A certificate is issued and the identity of the user 100 is registered between the user 100 and the issuer 200 (S1). The certificate is issued, for example, when the user 100 requests the issuance, the user 100 passes the license test, or the like, as an opportunity. The identity is registered, for example, when the user requests the issuance of a certificate or before the license test.

The identity is confirmed between the user 100 and the verifier 400 (S2). Identity confirmation is executed by the verifier 400 confirming the certificate of the user 100 issued by the issuer 200. The identity is confirmed, for example, in response to a request from the verifier 400 when the user 100 enjoys a service provided by the verifier 400.

The relay device 300 relays the communication relating to the certificate between the user 100, the issuer 200, and the verifier 400. For example, the relay device 300 stores (manages) the certificate issued to the user 100, and transmits the certificate to the verifier 400 in response to the request of the user 100. At this time, the relay device 300 controls such that the certificate is not to be transmitted to a party undesired by the issuer 200.

### <Exemplary Configuration of Relay Device 300>

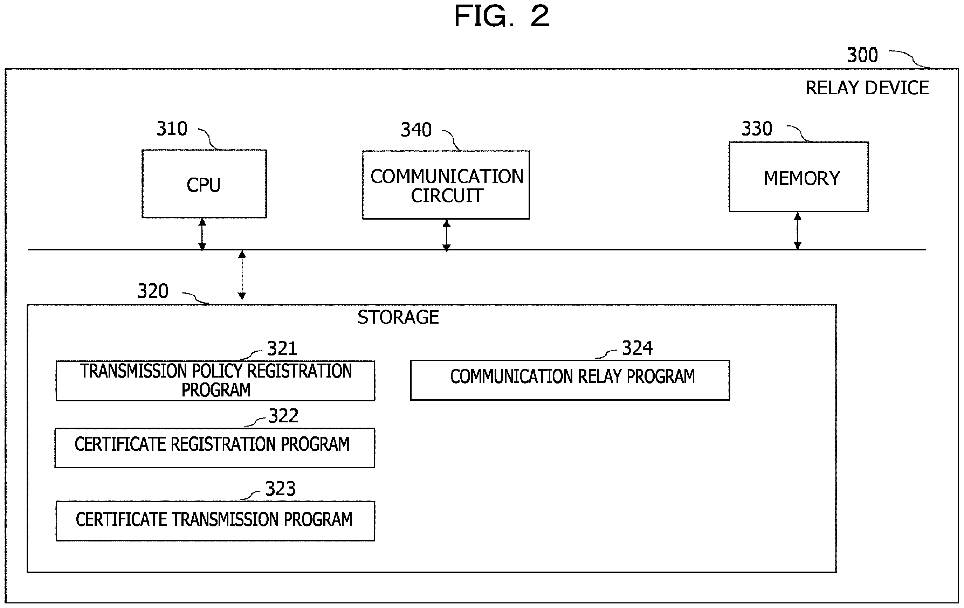

FIG. 2 is a diagram representing an exemplary configuration of the relay device 300. The relay device 300 includes a central processing unit (CPU) 310, a storage 320, a memory 330, and a communication circuit 340.

The storage 320 is an auxiliary storage device that stores programs and data, such as a flash memory, a hard disk drive (HDD), or a solid state drive (SSD). The storage 320 stores a transmission policy registration program 321, a certificate registration program 322, a certificate transmission program 323, and a communication relay program 324.

The memory 330 is an area in which a program stored in the storage 320 is loaded. Furthermore, the memory 330 may be used as an area in which the program stores data.

The CPU 310 is a processor that builds each unit and implements each process by loading a program stored in the storage 320 into the memory 330 and executing the loaded program.

The communication circuit 340 is a circuit that communicates with another device. The communication circuit 340 transmits and receives data to and from other devices via a network. The communication circuit 340 is, for example, a network interface card (NIC).

By executing the transmission policy registration program 321, the CPU 310 builds a policy management unit and performs a transmission policy registration process. The transmission policy registration process is a process of receiving a transmission policy from the issuer 200 and storing the transmission policy in an internal memory or the like. The transmission policy is prepared, for example, for each issuer 200 or each user 100.

By executing the certificate registration program 322, the CPU 310 builds a certificate management unit and performs a certificate registration process. The certificate registration process is a process of receiving a certificate of the user 100 from the issuer 200 and storing the certificate in an internal memory or the like. Certificate registration is prepared, for example, for each issuer 200 or each user 100. Note that the certificate to be managed is a certificate encrypted by the issuer 200.

By executing the certificate transmission program 323, the CPU 310 builds a transmission unit and performs a certificate transmission process. The certificate transmission process is a process of transmitting a certificate to the verifier 400 in accordance with the transmission policy in response to a request from the user 100. Note that the certificate to be transmitted is encrypted.

By executing the communication relay program 324, the CPU 310 builds a relay unit and performs a communication relay process. The communication relay process relays communication between the issuer 200, the user 100, and the verifier 400. The relay device 300 relays an encryption key transmitted by the user 100 to the verifier 400 in the communication relay process, for example. In the communication relay process, the relay device 300 hides, for example, the content of a message to be relayed so as not to leave the content in its own device.

### <Exemplary Configuration of Issuer Communication Device 200>

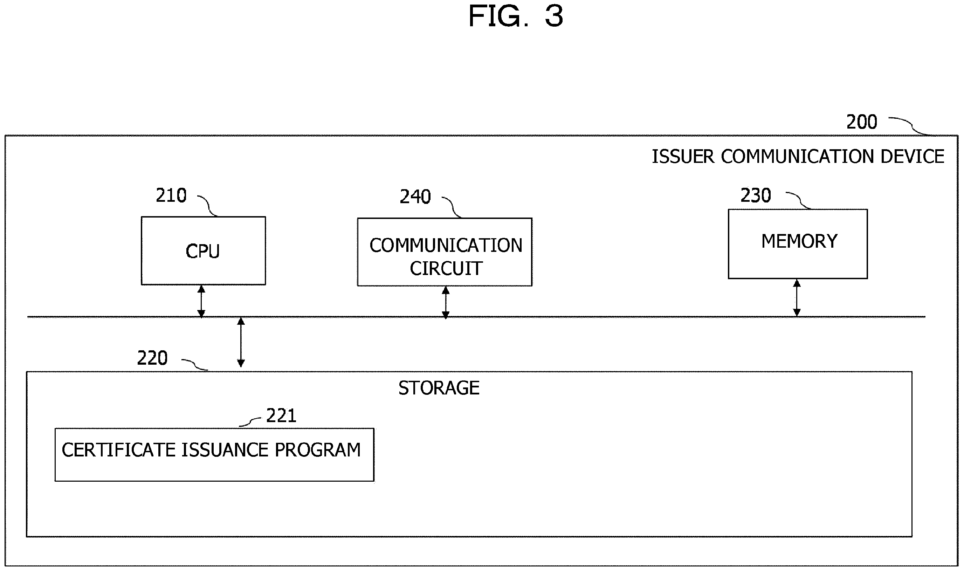

FIG. 3 is a diagram representing an exemplary configuration of an issuer communication device 200. The issuer communication device 200 includes a CPU 210, a storage 220, a memory 230, and a communication circuit 240.

The storage 220 is an auxiliary storage device that stores programs and data, such as a flash memory, an HDD, or an SSD. The storage 220 stores a certificate issuance program 221.

The memory 230 is an area in which a program stored in the storage 220 is loaded. Furthermore, the memory 230 may be used as an area in which the program stores data.

The CPU 210 is a processor that builds each unit and implements each process by loading a program stored in the storage 220 into the memory 230 and executing the loaded program.

The communication circuit 240 is a circuit that communicates with another device. The communication circuit 240 transmits and receives data to and from other devices via a network. The communication circuit 240 is, for example, an NIC.

By executing the certificate issuance program 221, the CPU 210 builds an issuance unit and performs a certificate issuance process. The certificate issuance process is a process of issuing a certificate for the user 100, encrypting the certificate, transmitting the encrypted certificate to the relay device 300, and transmitting the encryption key to the user 100, in response to the request of the user 100, for example. Furthermore, the certificate issuance process is a process of transmitting a transmission policy to the relay device 300.

### <Exemplary Configuration of User Communication Device 100>

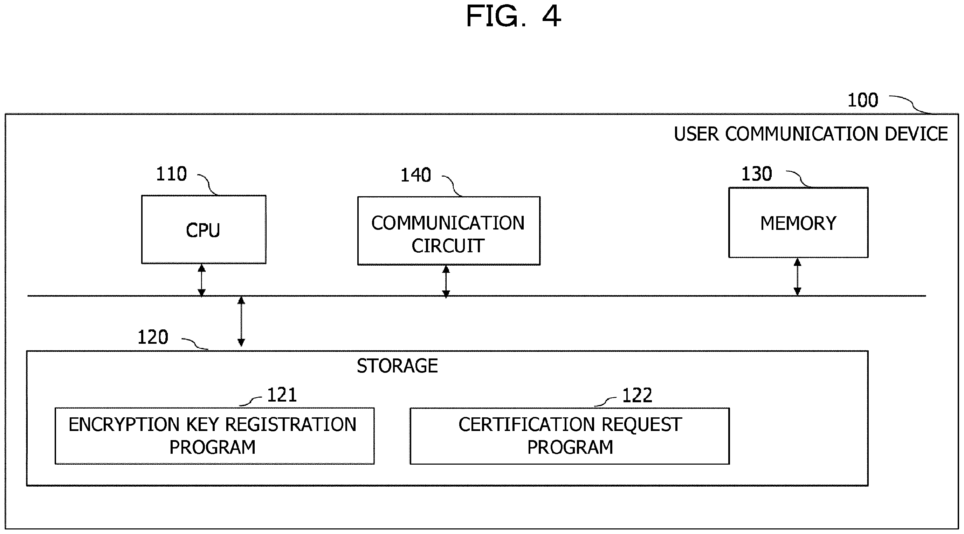

FIG. 4 is a diagram representing an exemplary configuration of a user communication device 100. The user communication device 100 includes a CPU 110, a storage 120, a memory 130, and a communication circuit 140.

The storage 120 is an auxiliary storage device that stores programs and data, such as a flash memory, an HDD, or an SSD. The storage 120 stores an encryption key registration program 121 and a certification request program 122.

The memory 130 is an area in which a program stored in the storage 120 is loaded. Furthermore, the memory 130 may be used as an area in which the program stores data.

The CPU 110 is a processor that builds each unit and implements each process by loading a program stored in the storage 120 into the memory 130 and executing the loaded program.

The communication circuit 140 is a circuit that communicates with another device. The communication circuit 140 transmits and receives data to and from other devices via a network. The communication circuit 140 is, for example, an NIC.

By executing the encryption key registration program 121, the CPU 110 builds an encryption key management unit and performs an encryption key registration process. The encryption key registration process is a process of receiving an encryption key from the issuer 200 and storing the received encryption key.

By executing the certification request program 122, the CPU 110 builds a request unit and performs a certification request process. The certification request process is a process of requesting the relay device 300 to send (transmit) a certificate to the verifier 400 to whom the user wants to transmit the certificate, in response to the user's need (the request of the verifier). In the certification request process, the user 100 transmits the encryption key to the verifier 400 to whom the user 100 wants to transmit the certificate.

### <Personal Authentication Process>

The personal authentication process will be described below. Note that the personal authentication process includes issuance of a certificate, sending of the certificate to the verifier 400, and sending of an encryption key to the verifier 400. About the issuance of a certificate, the sending of the certificate, and the sending of an encryption key, each will be described below.

### < 1. Issuance of Certificate>

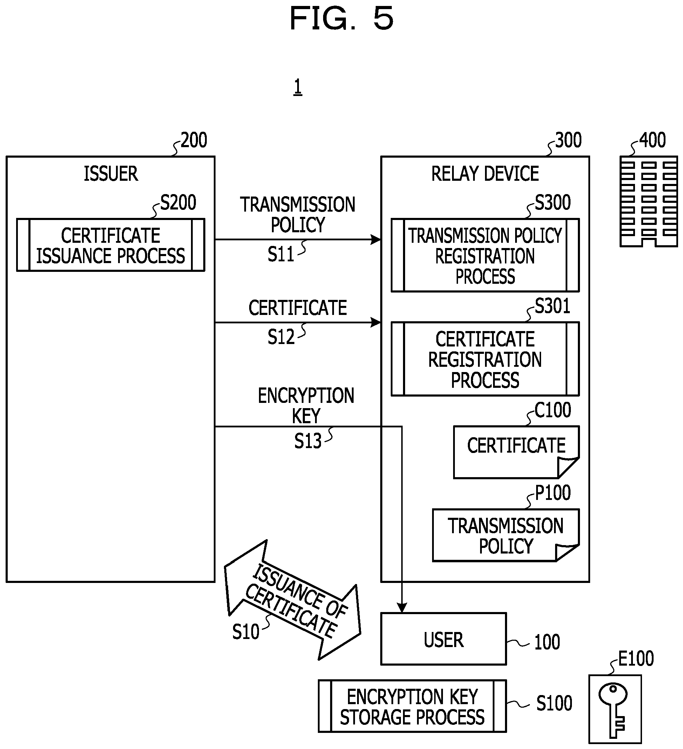

The issuance of a certificate will be described. FIG. 5 is a diagram illustrating an example of a certificate issuance sequence. The user 100 requests the issuer 200 to issue a certificate (S10). The issuer 200 performs the identity confirm and the like for the user 100, and permits the issuance of a certificate for the user 100 (S10). When issuing a certificate, the issuer 200 performs the certificate issuance process (S200).

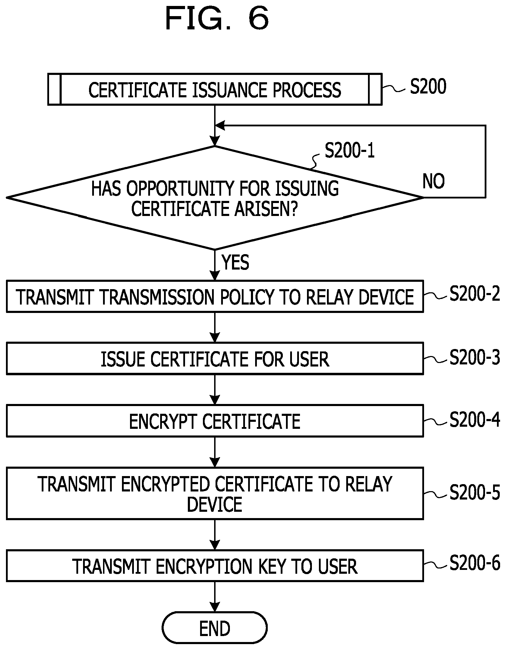

FIG. 6 is a diagram illustrating an example of a process flowchart of the certificate issuance process S200. The issuer 200 waits for an opportunity for issuing a certificate to arise (No in S200-1). The opportunity for issuing a certificate arises when, for example, the issuance of a certificate is permitted in response to the request of the user 100, or the like.

When the opportunity for issuing a certificate arises (Yes in S200-1), the issuer 200 transmits the transmission policy to the relay device 300 (S200-2). The transmission policy is a policy indicating whether or not the certificate is permitted to be transmitted, and, for example, includes a list or the like of identification information on the verifiers 400 for which the transmission is permitted.

The issuer 200 issues a certificate for the user 100 (S200-3). The issued certificate is, for example, a digital certificate used for digital signing.

The issuer 200 encrypts the issued certificate (S200-4). The issuer 200 generates a cipher to be used for encryption for each user.

The issuer 200 transmits the encrypted certificate to the relay device 300 (S200-5). Note that the issuer 200 notifies the relay device 300 that the certificate is for the user 100.

The issuer 200 transmits an encryption key to the user 100 (S200-6), and ends the process.

Returning to the sequence in FIG. 5, the issuer 200 transmits a transmission policy P100 to the relay device 300 in the certificate issuance process S200 (S11, S200-2 in FIG. 6).

Upon receiving the transmission policy P100 (S11), the relay device 300 performs the transmission policy registration process (S300).

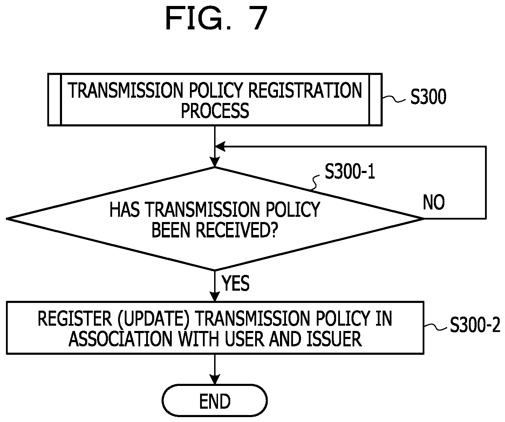

FIG. 7 is a diagram illustrating an example of a process flowchart of the transmission policy registration process S300. The relay device 300 waits for the transmission policy to be received from the issuer 200 (No in S300-1). Upon receiving the transmission policy (Yes in S300-1), the relay device 300 registers (updates) the transmission policy in association with the user 100 (S300-2), and ends the process.

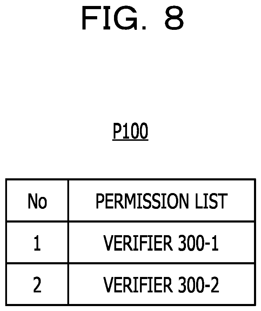

Here, the transmission policy will be described. FIG. 8 is a diagram illustrating an example of the transmission policy P100. The transmission policy is, for example, a list of the verifiers 400 to which the issuer 200 permits the certificate to be sent. The transmission policy is prepared for each user 100, for example. Furthermore, the transmission policy may be prepared for each issuer 200. The transmission policy P100 in FIG. 8 permits the certificate to be sent to the verifiers 400-1 and 400-2.

Note that the transmission policy may be, for example, a list of the verifiers 400 to which the issuer 200 does not permit the certificate to be sent. In this case, the certificate is permitted to be sent to verifiers other than those listed in the transmission policy.

Returning to the sequence in FIG. 5, the relay device 300 stores the transmission policy P100 in the transmission policy registration process S300 (S300-2 in FIG. 7).

Meanwhile, the issuer 200 transmits a certificate C100 of the user 100 to the relay device 300 in the certificate issuance process S200 (S11, S200-5 in FIG. 6). The certificate C100 is the certificate encrypted in the process S200-4 of the certificate issuance process S200 in FIG. 6.

Upon receiving the certificate C100 (S11), the relay device 300 performs the certificate registration process (S301).

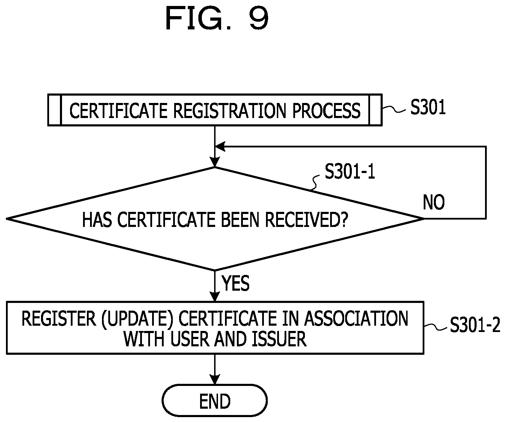

FIG. 9 is a diagram illustrating an example of a process flowchart of the certificate registration process S301. The relay device 300 waits for the certificate to be received from the issuer 200 (No in S301-1). Upon receiving the certificate (Yes in S301-1), the relay device 300 registers (updates) the certificate in association with the user 100 and the issuer 200 (S301-2), and ends the process.

Returning to the sequence in FIG. 5, the relay device 300 stores the certificate C100 in the certificate registration process S301 (S301-2 in FIG. 9).

Meanwhile, the issuer 200 transmits an encryption key E100 used for encrypting the certificate C100, to the user 100 in the certificate issuance process S200 (S13, S200-6 in FIG. 6). Note that, although the encryption key E100 is transmitted via the relay device 300 in FIG. 5, the encryption key E100 may be transmitted not via the relay device 300.

Upon receiving the encryption key E100, the user 100 performs an encryption key storage process (S100).

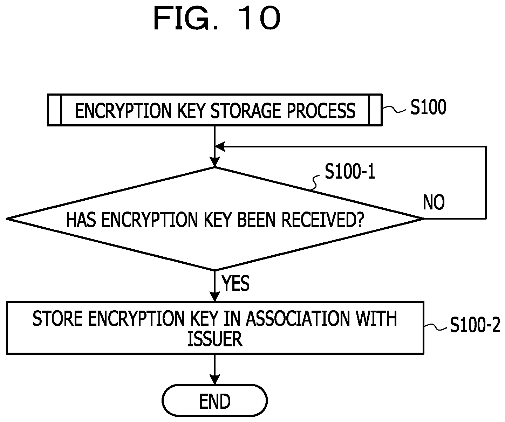

FIG. 10 is a diagram illustrating an example of a process flowchart of the encryption key storage process S100. The user 100 waits for the encryption key to be received from the issuer 200 (No in S100-1). Upon receiving the encryption key (Yes in S100-1), the user 100 stores the encryption key in an internal memory or the like in association with the issuer 200 (S100-2), and ends the process.

Returning to the sequence in FIG. 5, the user 100 stores the received encryption key E100 in the encryption key storage process S100 (S100-2 in FIG. 10).

### <2. Sending of Certificate>

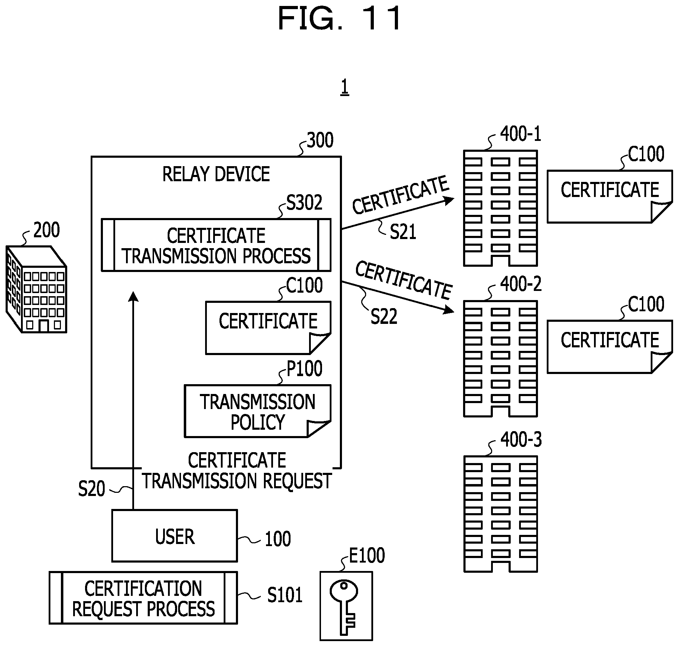

Next, the sending of the certificate will be described. FIG. 11 is a diagram illustrating an example of a certificate sending sequence. The user 100 performs the certification request process when giving a proof of identity to the verifier 400 to prove that the identity of the user 100 is correct (S101).

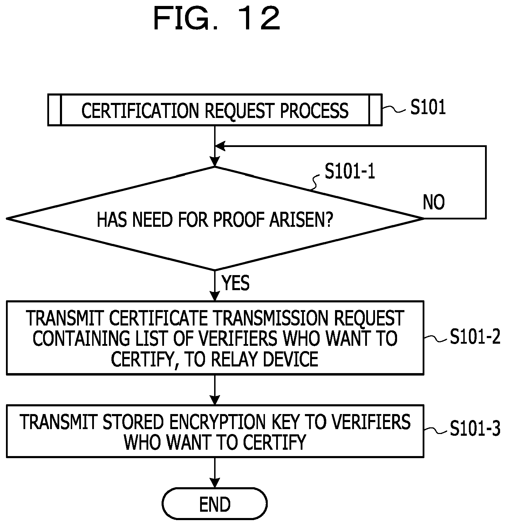

FIG. 12 is a diagram illustrating an example of a process flowchart of the certification request process S101. The user 100 waits for the need for proof (an opportunity for performing personal authentication) to arise (No in S101-1). When the need for proof arises (Yes in S101-1), the user 100 transmits a certificate transmission request containing a list of verifiers who want to certify (request the sending of the certificate), to the relay device 300 (S101-2).

Then, the user 100 transmits the stored encryption key to the verifiers (verifiers in the list) who want to certify (S101-3), and ends the process.

Returning to the sequence in FIG. 11, the user 100 transmits the certificate transmission request in the certification request process S101 (S20, S101-2 in FIG. 12). Note that the certificate transmission request is assumed to contain a list including the verifiers 400-1 to 400-3 to which the user 100 requests the certificate to be sent.

Upon receiving the certificate transmission request (S20), the relay device 300 performs the certificate transmission process (S302).

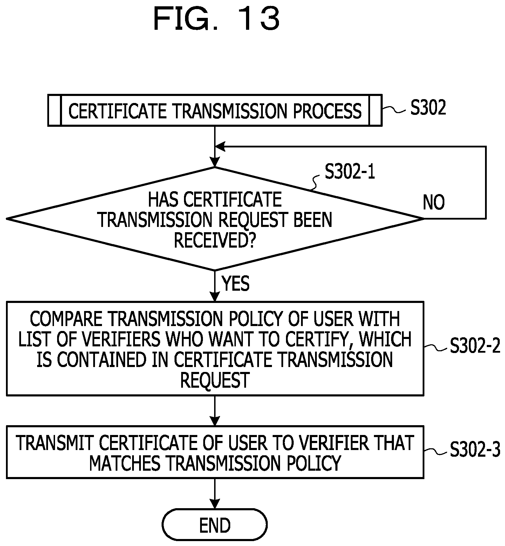

FIG. 13 is a diagram illustrating an example of a process flowchart of the certificate transmission process S302. The relay device 300 waits for the certificate transmission request to be received (No in S302-1). Upon receiving the certificate transmission request (Yes in S302-1), the relay device 300 compares the transmission policy of the user 100 with the list of the verifiers 400 contained in the certificate transmission request (S302-2). Then, the relay device 300 transmits the certificate of the user 100 to the verifier 400 that matches the transmission policy (S302-3), and ends the process.

Returning to the sequence in FIG. 11, the relay device 300 compares the transmission policy P100 with the verifiers 400-1 to 400-3 contained in the certificate transmission request in the certificate transmission process S302 (S302-2 in FIG. 13). Here, the transmission policy P100 indicates that the certificate is permitted to be sent to the verifiers 400-1 and 400-2. On the other hand, the transmission policy P100 indicates that the certificate is not permitted to be sent to the verifier 400-3. Accordingly, the relay device 300 determines that the certificate is to be transmitted to the verifiers 400-1 and 400-2 and the certificate is not to be transmitted to the verifier 400-3, and transmits the certificate to the verifiers 400-1 and 400-2 (S21, S22, S302-3 in FIG. 13).

The verifiers 400-1 and 400-2 store the received certificate, for example.

### <3. Sending of Encryption Key>

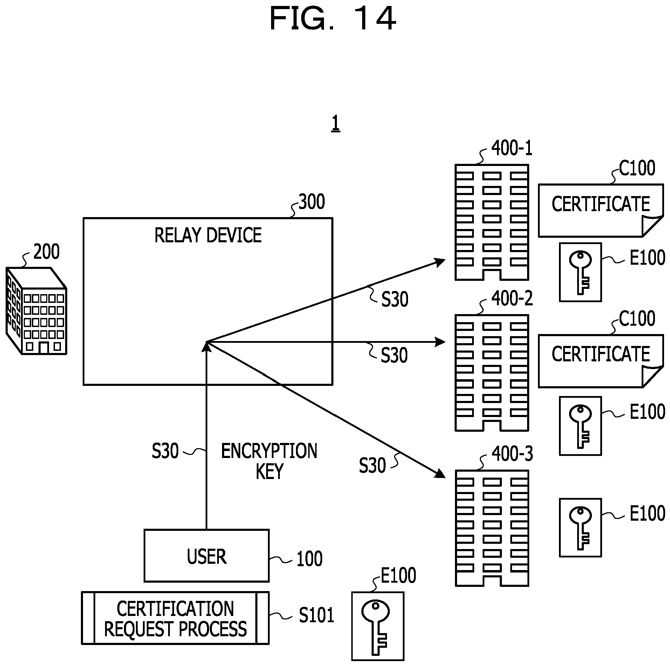

Next, the sending of the encryption key will be described. FIG. 14 is a diagram illustrating an example of an encryption key sending sequence. In the certification request process S101, the user 100 transmits the stored encryption key E100 to the verifiers 400-1 to 400-3 who want to certify (S30, S101-3 in FIG. 12). Note that, although the encryption key E100 is transmitted via the relay device 300 in FIG. 14, the encryption key E100 may be transmitted not via the relay device 300.

The verifiers 400-1 to 400-3 store the received encryption key, for example.

When the series of processes ends, the verifiers 400-1 and 400-2 store the certificate C100 and the encryption key E100. For example, the verifiers 400-1 and 400-2, to which the issuer 200 permits the certificate to be sent, have the encrypted certificate C100 and the encryption key E100, and thus are allowed to combine the certificate C100 using the encryption key E100 and confirm that the user 100 is the correct person whose certificate is issued by the issuer 200.

On the other hand, the verifier 400-3, to which the issuer 200 does not permit the certificate to be sent, has the encryption key E100 but does not have the certificate C100, and thus is not allowed to perform the personal authentication for the user 100.

In the first embodiment, the relay device 300 manages the certificate, and the user 100 manages the encryption key. Then, since the relay device 300 designates the sending destination of the certificate in accordance with the transmission policy, the sending of the certificate to the verifier 400 that is not permitted by the issuer 200 may be suppressed.

### [Second Embodiment]

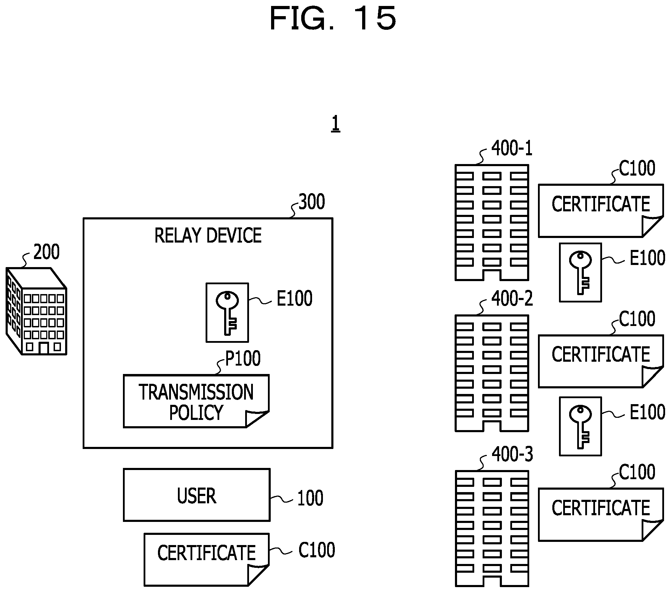

A second embodiment will be described. In the second embodiment, a relay device 300 manages the encryption key, and a user 100 manages the certificate. FIG. 15 is a diagram illustrating an example of a communication system 1 according to the second embodiment. As illustrated in FIG. 15, the relay device 300 manages an encryption key E100. Meanwhile, the user 100 manages a certificate C100. Thereafter, by exchanging the certificate C100 and the encryption key E100 (reading the certificate C100 and the encryption key E100 as each other) and executing each process in the first embodiment, a state is brought about in which verifiers 400-1 and 400-2 each have the certificate C100 and the encryption key E100 and a verifier 400-3 has only the certificate C100. This allows, as in the first embodiment, the verifiers 400-1 and 400-2 to perform personal authentication for the user 100, but does not allow the verifier 400-3 to perform personal authentication for the user 100. That is, since the personal authentication is difficult to perform for the user 100 without both of the certificate C100 and the encryption key E100, effects similar to the effects of the first embodiment may be achieved even if the management of the certificate and the encryption key is changed between the user 100 and the relay device 300.

### [Third Embodiment]

A third embodiment will be described. In the third embodiment, a relay device 300 transmits the encryption key in accordance with the transmission policy.

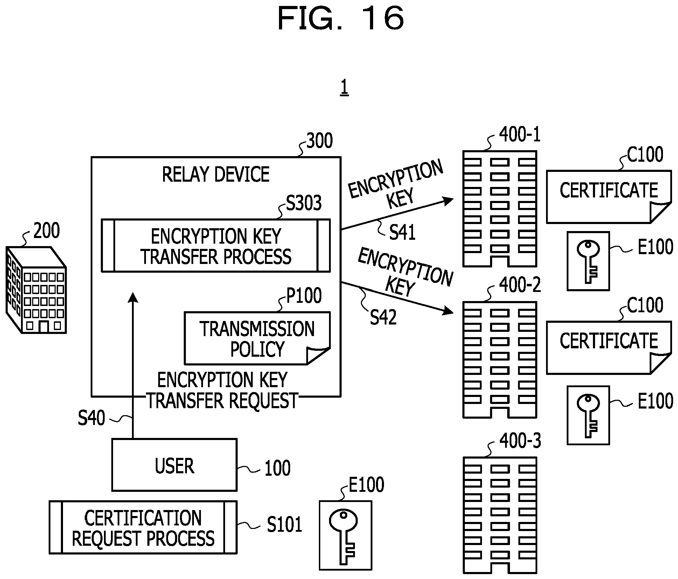

FIG. 16 is a diagram illustrating an example of an encryption key sending sequence according to the third embodiment. A user 100 performs a certification request process S101.

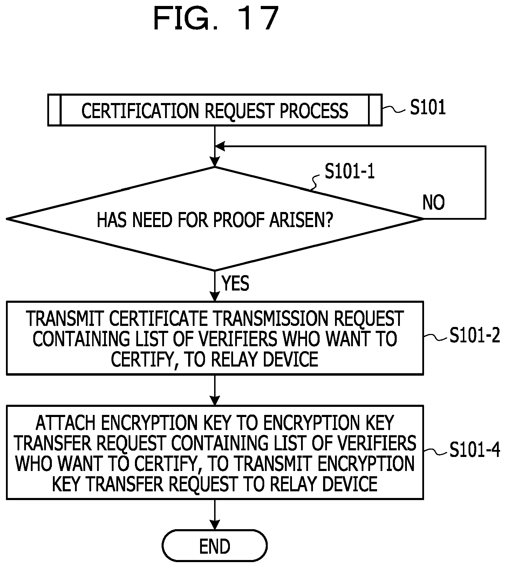

FIG. 17 is a diagram illustrating an example of a process flowchart of the certification request process S101 according to the third embodiment. Processes S101-1 and S101-2 are similar to the processes S101-1 and S101-2 in FIG. 12.

In the certification request process S101, the user 100 attaches the encryption key to an encryption key transfer request containing the list of verifiers who want to certify, to transmit the encryption key transfer request to the relay device 300 (S101-4), and ends the process.

Returning to the sequence in FIG. 16, the user 100 transmits the encryption key transfer request that contains the verifiers 400-1 to 400-3 and is attached with the encryption key E100, to the relay device 300 in the certification request process S101 (S40, S101-4 in FIG. 17).

Upon receiving the encryption key transfer request (S40), the relay device 300 performs an encryption key transfer process (S303).

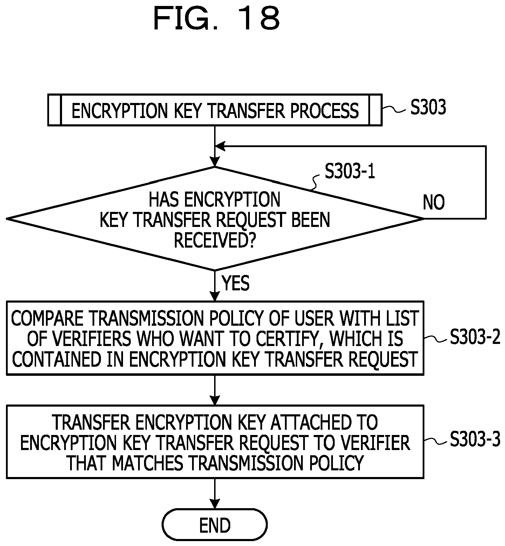

FIG. 18 is a diagram illustrating an example of a process flowchart of the encryption key transfer process S303. The relay device 300 waits for the encryption key transfer request to be received (No in S303-1). Upon receiving the encryption key transfer request (Yes in S303-1), the relay device 300 compares the transmission policy of the user 100 with the list of the verifiers 400 contained in the encryption key transfer request (S303-2). Then, the relay device 300 transfers the encryption key attached to the encryption key transfer request to the verifier 400 that matches the transmission policy (S303-3), and ends the process.

Returning to the sequence in FIG. 16, the relay device 300 compares the transmission policy P100 with the verifiers 400-1 to 400-3 contained in the encryption key transfer request in the encryption key transfer process S303 (S303-2 in FIG. 18). As in the case of the certificate C100, the relay device 300 determines that the encryption key E100 is to be transmitted to the verifiers 400-1 and 400-2 and the encryption key E100 is not to be transmitted to the verifier 400-3, and transmits the encryption key E100 to the verifiers 400-1 and 400-2 (S41, S42, S303-3 in FIG. 18).

In the third embodiment, the certificate C100 and the encryption key E100 are not transmitted to the verifier 400-3, to which the issuer 200 does not permit the certificate to be sent. In the first and second embodiments, only the encryption key (or only the certificate) is sent to the verifier 400 to which the issuer 200 does not permit the certificate to be sent. Since the certificate and the encryption key may not be combined unless both are available, the request of the issuer 200 is fulfilled by allowing the verifier to which the issuer 200 does not permit the certificate to be sent, to have only one of the certificate and the encryption key. However, if the verifier to which the issuer 200 does not permit the certificate to be sent obtains another of the encryption key and the certificate by some mistake or improper manner, for example, the verifier will be allowed to combine. In contrast to this, in the third embodiment, by not transmitting any of the encryption key and the certificate to the verifier to which the issuer 200 does not permit the certificate to be sent, the possibility that the verifier to which the issuer 200 does not permit the certificate to be sent is brought into a state in which combining the encryption key and the certificate is allowed (a state in which both have been obtained) may be reduced.

Moreover, since the relay device 300 does not manage the encryption key but only transfers the encryption key received from the user 100, the encryption key and the certificate are not available simultaneously in the relay device 300. Therefore, the security for the relay device 300 is similar to the cases of the first and second embodiments.

### [Other Embodiments]

The issuer 200 transmits the certificate and the transmission policy to the relay device 300 in the certificate issuance process S200. However, the issuer 200 may transmit the certificate and the transmission policy to the relay device 300 at any timing. The issuer 200 may reissue the certificate and transmit the reissued certificate to the relay device 300 when the contents of the certificate are changed, such as when the expiration date is changed or the user's address is changed, for example. Furthermore, the issuer 200 may update the transmission policy and transmit the updated transmission policy to the relay device 300, for example, when there is a change in the verifiers to which the certificate is permitted to be sent. The relay device 300 stores (updates) the transmission policy and the certificate received at any timing in the memory of its own device. This allows the certificate and transmission policy to be maintained in the latest state at all times.

Furthermore, the relay device 300 may notify the user 100 that the certificate has not been transmitted, for example, when the certificate has not been transmitted to one or more verifiers among verifies to which the user 100 requests the certificate to be sent. This allows the user 100 to know the verifier 400 to which the certificate has not been transmitted.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A communication program that causes a computer (300) to execute a process, the process comprising:
receiving (S200-5) a certificate of a user (100) from a second communication device (200) which issues the certificate to the user (100);
receiving (S200-2), from the second communication device (200), policy information that is to be used in the computer (300) to determine whether the certificate of the user (100) is permitted to be sent to a third communication device (400);
in response to receiving (S302-1), from a first communication device (100) used by the user (100), a request for sending the certificate of the user (100) to the third communication device (400), obtaining (S302-2) a determination result by determining whether the certificate of the user (100) is permitted to be sent to the third communication device (400) in accordance with the received policy information; and
in response to the determination result indicating that the certificate of the user (100) is permitted to be sent to the third communication device (400), sending (S302-3), to the third communication device (400), the certificate of the user (100).

2. The communication program according to claim 1, wherein
the second communication device (200) is used by an issuer (200), and
the third communication device (400) is used by a first verifier (400).

3. The communication program according to claim 2, wherein
the certificate of the user (100) received from the second communication device (200) is encrypted by the issuer (200), and
an encryption key (E100) used for the encryption of the certificate is transmitted to the first communication device (100) of the user (100).

4. The communication program according to claim 2 or claim 3, wherein
in response to receiving, from the first communication device (100) of the user (100), a request to transfer the encryption key (E100) to the third communication device (400) of the first verifier (400), determining whether or not the certificate is permitted to be sent to the third communication device (400) of the first verifier (400); and
transferring, to the third communication device (400) of the first verifier (400), the encryption key (E100) that is sent from the first communication device (100) of the user (100) in response to the determining that the certificate is permitted to be sent.

5. The communication program according to any preceding claim, wherein
the policy information includes information regarding a verifier (400) to which the certificate of the user (100) is permitted to be sent.

6. The communication program according to any preceding claim, wherein
the policy information includes information regarding a verifier (400) to which the certificate of the user (100) is not permitted to be sent.

7. A relay device (300) comprising:
a first unit configured to receive (S200-5) a certificate of a user (100) from a second communication device (200) which issues the certificate to the user (100);
a second unit configured to receive (S200-2), from the second communication device (200), policy information that is to be used in the relay device (300) to determine whether the certificate of the user (100) is permitted to be sent to a third communication device (400);
a third unit configured to, in response to receiving (S302-1), from a first communication device (100) used by the user (100), a request for sending the certificate of the user (100) to the third communication device (400), obtain (S302-2) a determination result by determining whether the certificate of the user (100) is permitted to be sent to the third communication device (400) in accordance with the received policy information; and
a fourth unit configured to, in response to the determination result indicating that the certificate of the user (100) is permitted to be sent to the third communication device (400), send (S302-3), to the third communication device (400), the certificate of the user (100).

8. A communication method executed by a computer (300), the method comprising:
receiving (S200-5) a certificate of a user (100) from a second communication device (200) which issues the certificate to the user (100);
receiving (S200-2), from the second communication device (200), policy information that is to be used in the computer (300) to determine whether the certificate of the user (100) is permitted to be sent to a third communication device (400);
in response to receiving (S302-1), from a first communication device (100) used by the user (100), a request for sending the certificate of the user (100) to the third communication device (400), obtaining (S302-2) a determination result by determining whether the certificate of the user (100) is permitted to be sent to the third communication device (400) in accordance with the received policy information; and
in response to the determination result indicating that the certificate of the user (100) is permitted to be sent to the third communication device (400), sending (S302-3), to the third communication device (400), the certificate of the user (100).

## Patentansprüche

1. Kommunikationsprogramm, das einen Computer (300) veranlasst, einen Prozess auszuführen, wobei der Prozess Folgendes umfasst:
Empfangen (S200-5) eines Zertifikats eines Benutzers (100) von einer zweiten Kommunikationsvorrichtung (200), die das Zertifikat an den Benutzer (100) ausstellt;
Empfangen (S200-2) von Richtlinieninformationen, die in dem Computer (300) zu verwenden sind, von der zweiten Kommunikationsvorrichtung (200), um zu bestimmen, ob das Zertifikat des Benutzers (100) an eine dritte Kommunikationsvorrichtung (400) gesendet werden darf;
als Reaktion auf Empfangen (S302-1) einer Anfrage zum Senden des Zertifikats des Benutzers (100) an die dritte Kommunikationsvorrichtung (400) von einer ersten Kommunikationsvorrichtung (100), die durch den Benutzer (100) verwendet wird, Erlangen (S302 -2) eines Bestimmungsergebnisses, indem bestimmt wird, ob das Zertifikat des Benutzers (100) gemäß den empfangenen Richtlinieninformationen an die dritte Kommunikationsvorrichtung (400) gesendet werden darf; und
als Reaktion darauf, dass das Bestimmungsergebnis angibt, dass das Zertifikat des Benutzers (100) an die dritte Kommunikationsvorrichtung (400) gesendet werden darf, Senden (S302-3) des Zertifikats des Benutzers (100) an die dritte Kommunikationsvorrichtung (400).

2. Kommunikationsprogramm nach Anspruch 1, wobei
die zweite Kommunikationsvorrichtung (200) durch einen Aussteller (200) verwendet wird, und
die dritte Kommunikationsvorrichtung (400) durch einen ersten Verifizierer (400) verwendet wird.

3. Kommunikationsprogramm nach Anspruch 2, wobei
das von der zweiten Kommunikationsvorrichtung (200) empfangene Zertifikat des Benutzers (100) durch den Aussteller (200) verschlüsselt wird, und
ein zur Verschlüsselung des Zertifikats verwendeter Verschlüsselungsschlüssel (E100) an die erste Kommunikationsvorrichtung (100) des Benutzers (100) übermittelt wird.

4. Kommunikationsprogramm nach Anspruch 2 oder Anspruch 3, wobei als Reaktion auf das Empfangen einer Anfrage von der ersten Kommunikationsvorrichtung (100) des Benutzers (100) zum Übermitteln des Verschlüsselungsschlüssels (E100) an die dritte Kommunikationsvorrichtung (400) des ersten Verifizierers (400), Bestimmen, ob das Zertifikat an die dritte Kommunikationsvorrichtung (400) des ersten Verifizierers (400) gesendet werden darf oder nicht; und
Übermitteln des Verschlüsselungsschlüssels (E100), der von der ersten Kommunikationsvorrichtung (100) des Benutzers (100) an die dritte Kommunikationsvorrichtung (400) des ersten Verifizierers (400) gesendet wird, als Reaktion auf das Bestimmen, dass das Zertifikat gesendet werden darf.

5. Kommunikationsprogramm nach einem der vorhergehenden Ansprüche, wobei
die Richtlinieninformationen Informationen zu einem Verifizierer (400) beinhalten, an den das Zertifikat des Benutzers (100) gesendet werden darf.

6. Kommunikationsprogramm nach einem der vorhergehenden Ansprüche, wobei
die Richtlinieninformationen Informationen zu einem Verifizierer (400) beinhalten, an den das Zertifikat des Benutzers (100) nicht gesendet werden darf.

7. Relaisvorrichtung (300), umfassend:
eine erste Einheit, die zumEmpfangen (S200-5) eines Zertifikats eines Benutzers (100) von einer zweiten Kommunikationsvorrichtung (200) konfiguriert ist, die das Zertifikat an den Benutzer (100) ausstellt;
eine zweite Einheit, die zum Empfangen (S200-2) von Richtlinieninformationen, die in der Relaisvorrichtung (300) zu verwenden ist, von der zweiten Kommunikationsvorrichtung (200) konfiguriert ist, um zu bestimmen, ob das Zertifikat des Benutzers (100) an eine dritte Kommunikationsvorrichtung (400) gesendet werden darf;
eine dritte Einheit, die als Reaktion auf Empfangen (S302-1) einer Anfrage zum Senden des Zertifikats des Benutzers (100) an die dritte Kommunikationsvorrichtung (400) von einer ersten Kommunikationsvorrichtung (100), die durch den Benutzer (100) verwendet wird, zum Erlangen (S302-2) eines Bestimmungsergebnisses konfiguriert ist, indem bestimmt wird, ob das Zertifikat des Benutzers (100) gemäß den empfangenen Richtlinieninformationen an die dritte Kommunikationsvorrichtung (400) gesendet werden darf; und
eine vierte Einheit, die als Reaktion darauf, dass das Bestimmungsergebnis angibt, dass das Zertifikat des Benutzers (100) an die dritte Kommunikationsvorrichtung (400) gesendet werden darf, zum Senden (S302-3) des Zertifikats des Benutzers (100) an die dritte Kommunikationsvorrichtung (400) konfiguriert ist.

8. Durch einen Computer (300) ausgeführtes Kommunikationsverfahren, wobei das Verfahren Folgendes umfasst:
Empfangen (S200-5) eines Zertifikats eines Benutzers (100) von einer zweiten Kommunikationsvorrichtung (200), die das Zertifikat an den Benutzer (100) ausstellt;
Empfangen (S200-2) von Richtlinieninformationen, die in dem Computer (300) zu verwenden sind, von der zweiten Kommunikationsvorrichtung (200), um zu bestimmen, ob das Zertifikat des Benutzers (100) an eine dritte Kommunikationsvorrichtung (400) gesendet werden darf;
als Reaktion auf Empfangen (S302-1) einer Anfrage zum Senden des Zertifikats des Benutzers (100) an die dritte Kommunikationsvorrichtung (400) von einer ersten Kommunikationsvorrichtung (100), die durch den Benutzer (100) verwendet wird, Erlangen (S302-2) eines Bestimmungsergebnisses, indem bestimmt wird, ob das Zertifikat des Benutzers (100) gemäß den empfangenen Richtlinieninformationen an die dritte Kommunikationsvorrichtung (400) gesendet werden darf; und
als Reaktion darauf, dass das Bestimmungsergebnis angibt, dass das Zertifikat des Benutzers (100) an die dritte Kommunikationsvorrichtung (400) gesendet werden darf, Senden (S302-3) des Zertifikats des Benutzers (100) an die dritte Kommunikationsvorrichtung (400).

## Revendications

1. Programme de communication qui amène un ordinateur (300) à exécuter un processus, le processus comprenant :
la réception (S200-5) d'un certificat d'un utilisateur (100) depuis un deuxième dispositif de communication (200) qui délivre le certificat à l'utilisateur (100) ;
la réception (S200-2), depuis le deuxième dispositif de communication (200), d'informations de politique qui doivent être utilisées dans l'ordinateur (300) pour déterminer si le certificat de l'utilisateur (100) est autorisé à être envoyé à un troisième dispositif de communication (400) ;
en réponse à la réception (S302-1), depuis un premier dispositif de communication (100) utilisé par l'utilisateur (100), d'une demande d'envoi du certificat de l'utilisateur (100) au troisième dispositif de communication (400), l'obtention (S302-2) d'un résultat de détermination en déterminant si le certificat de l'utilisateur (100) est autorisé à être envoyé au troisième dispositif de communication (400) conformément aux informations de politique reçues ; et
en réponse au résultat de détermination indiquant que le certificat de l'utilisateur (100) est autorisé à être envoyé au troisième dispositif de communication (400), l'envoi (S302-3), au troisième dispositif de communication (400), du certificat de l'utilisateur (100).

2. Programme de communication selon la revendication 1, dans lequel
le deuxième dispositif de communication (200) est utilisé par un émetteur (200), et
le troisième dispositif de communication (400) est utilisé par un premier vérificateur (400).

3. Programme de communication selon la revendication 2, dans lequel
le certificat de l'utilisateur (100) reçu du deuxième dispositif de communication (200) est crypté par l'émetteur (200), et
une clé de cryptage (E100) utilisée pour le cryptage du certificat est transmise au premier dispositif de communication (100) de l'utilisateur (100).

4. Programme de communication selon la revendication 2 ou la revendication 3, dans lequel
en réponse à la réception, depuis le premier dispositif de communication (100) de l'utilisateur (100), d'une demande de transfert de la clé de cryptage (E100) au troisième dispositif de communication (400) du premier vérificateur (400), le fait de déterminer si oui ou non le certificat est autorisé à être envoyé au troisième dispositif de communication (400) du premier vérificateur (400) ; et
le transfert, au troisième dispositif de communication (400) du premier vérificateur (400), de la clé de cryptage (E100) qui est envoyée depuis le premier dispositif de communication (100) de l'utilisateur (100) en réponse à la détermination que le certificat est autorisé à être envoyé.

5. Programme de communication selon une quelconque revendication précédente, dans lequel
les informations de politique comportent des informations concernant un vérificateur (400) auquel le certificat de l'utilisateur (100) est autorisé à être envoyé.

6. Programme de communication selon une quelconque revendication précédente, dans lequel
les informations de politique comportent des informations concernant un vérificateur (400) auquel le certificat de l'utilisateur (100) est autorisé à être envoyé.

7. Dispositif relais (300) comprenant :
une première unité configurée pour recevoir (S200-5) un certificat d'un utilisateur (100) depuis un deuxième dispositif de communication (200) qui délivre le certificat à l'utilisateur (100) ;
une deuxième unité configurée pour recevoir (S200-2), depuis le deuxième dispositif de communication (200), des informations de politique qui doivent être utilisées dans le dispositif relais (300) pour déterminer si le certificat de l'utilisateur (100) est autorisé à être envoyé à un troisième dispositif de communication (400) ;
une troisième unité configurée pour, en réponse à la réception (S302-1), depuis un premier dispositif de communication (100) utilisé par l'utilisateur (100), d'une demande d'envoi du certificat de l'utilisateur (100) au troisième dispositif de communication (400), obtenir (S302-2) un résultat de détermination en déterminant si le certificat de l'utilisateur (100) est autorisé à être envoyé au troisième dispositif de communication (400) conformément aux informations de politique reçues ; et
une quatrième unité configurée pour, en réponse au résultat de détermination indiquant que le certificat de l'utilisateur (100) est autorisé à être envoyé au troisième dispositif de communication (400), envoyer (S302-3), au troisième dispositif de communication (400), le certificat de l'utilisateur (100).

8. Procédé de communication exécuté par un ordinateur (300), le procédé comprenant :
la réception (S200-5) d'un certificat d'un utilisateur (100) depuis un deuxième dispositif de communication (200) qui délivre le certificat à l'utilisateur (100) ;
la réception (S200-2), depuis le deuxième dispositif de communication (200), d'informations de politique qui doivent être utilisées dans l'ordinateur (300) pour déterminer si le certificat de l'utilisateur (100) est autorisé à être envoyé à un troisième dispositif de communication (400) ;
en réponse à la réception (S302-1), depuis un premier dispositif de communication (100) utilisé par l'utilisateur (100), d'une demande d'envoi du certificat de l'utilisateur (100) au troisième dispositif de communication (400), l'obtention (S302-2) d'un résultat de détermination en déterminant si le certificat de l'utilisateur (100) est autorisé à être envoyé au troisième dispositif de communication (400) conformément aux informations de politique reçues ; et
en réponse au résultat de détermination indiquant que le certificat de l'utilisateur (100) est autorisé à être envoyé au troisième dispositif de communication (400), l'envoi (S302-3), au troisième dispositif de communication (400), du certificat de l'utilisateur (100).
